(19) Europäisches Patentamt
European Patent Office
Office européen des brevets

(11) Veröffentlichungsnummer: **0 014 882**
**B1**

(12) # EUROPÄISCHE PATENTSCHRIFT

(45) Veröffentlichungstag der Patentschrift: **03.11.82**

(51) Int. Cl.³: **C 09 B 33/04**, C 09 B 33/18, D 06 P 3/06, D 06 P 3/32

(21) Anmeldenummer: **80100544.8**

(22) Anmeldetag: **04.02.80**

(54) **Azofarbstoffe sowie deren Verwendung zum Färben und Bedrucken stickstoffhaltiger Materialien und Leder.**

(30) Priorität: **16.02.79 DE 2905974**

(43) Veröffentlichungstag der Anmeldung: **03.09.80 (Patentblatt 80/18)**

(45) Bekanntmachung des Hinweises auf die Patenterteilung: **03.11.82 Patentblatt 82/44**

(84) Benannte Vertragsstaaten: **BE CH DE FR GB IT**

(56) Entgegenhaltungen:
**FR A 1 482 779**
**GB A 932 024**
**US A 2 042 810**
**US A 2 111 559**

**Die Akte enthält technische Angaben, die nach dem Eingang der Anmeldung eingereicht wurden und die nicht in dieser Patentschrift enthalten sind.**

(73) Patentinhaber: **BAYER AG**
**Zentralbereich Patente, Marken und Lizenzen**
**D-5090 Leverkusen 1, Bayerwerk (DE)**

(72) Erfinder: **Westphal, Jochen, Dr.**
**Naegelestrasse 10a**
**D-4000 Düsseldorf (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

EP 0 014 882 B1

# Azofarbstoffe sowie deren Verwendung zum Färben und Bedrucken stickstoffhaltiger Materialien und Leder

Gegenstand der vorliegenden Erfindung sind Farbstoffe der Formel

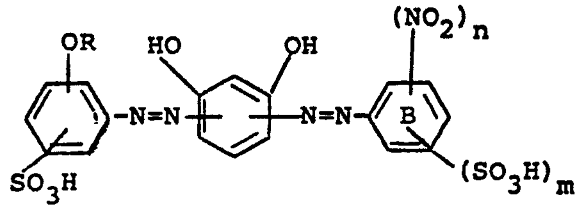

(I)

worin

R = $C_1$-$C_4$-Alkyl

n = 0, 1 oder 2

m = 1 oder 2

wobei im Falle von m = 1 und n = 1 die Nitrogruppe in 4-Stellung und die Sulfogruppe in 3- bzw. 5-Stellung steht und der Ring B gegebenenfalls durch Cl, $CH_3$ oder $OCH_3$ weitersubstituiert ist.

Als Reste der Formel

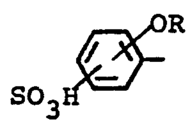

kommen bevorzugt in Frage :

2-Methoxy-5-Sulfophenyl
4-Methoxy-3-Sulfophenyl
4-Methoxy-2-Sulfophenyl

Bevorzugte Phenylreste B sind neben den oben genannten :

2,3- oder 4-Sulfophenyl,
2,4- oder 2,5-Disulfophenyl,
4-Chlor, 2-Sulfophenyl,
2,4-Dichlor, 2-Sulfophenyl,
2-Chlor, 5-Sulfophenyl,
4-Chlor, 3-Sulfophenyl,
2-Chlor, 4-Sulfophenyl,
2,5-Dichlor, 4-Sulfophenyl,
4-Methyl, 3-Sulfophenyl,
3-Methyl, 4-Sulfophenyl,
4-Methyl, 2-Sulfophenyl,
2-Methyl, 4-Sulfophenyl,
2-Methyl, 6-Chlor, 4-Sulfophenyl,
2-Methyl, 5-Sulfophenyl,
2,4-Dimethyl, 6-Sulfophenyl.

Bevorzugte Farbstoffe sind solche der Formeln I, worin der Rest

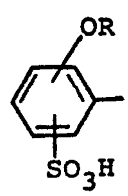

für

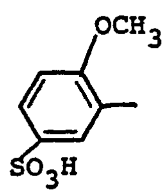

steht.

Weitere bevorzugte Farbstoffe sind solche mit n = 0 oder n = 1 mit Nitrogruppen in 2-, 3-, 5- oder 6-Stellung. Besonders bevorzugt sind die Farbstoffe der Formeln

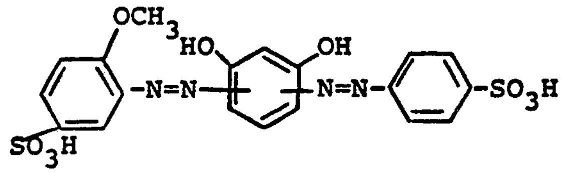 (II)

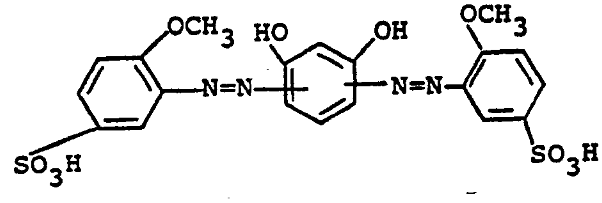 (III)

Farbstoffe der Formel I erhält man bevorzugt durch Diazotierungs- und Kupplungs-Reaktionen, wobei die Reihenfolge der Verknüpfung wie in der Azochemie bekannt häufig variierbar ist.

Man kuppelt beispielsweise die Diazoniumsalze der beiden Amine IV und V in beliebiger Reihenfolge (eventuell auch als Mischung) auf Resorcin

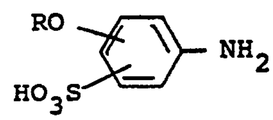 (IV)

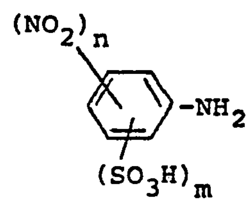 (V)

In den Formeln IV und V haben R, m und n die oben angegebenen Bedeutungen.

Die neuen Farbstoffe eignen sich zum Färben und Bedrucken stickstoffhaltiger Fasermaterialien wie Wolle und Polyamid sowie zum Färben von Leder.

Die angegebenen Formeln sind die der freien Säuren. Im allgemeinen fallen die Farbstoffe als Salze an und werden auch als solche zum Färben eingesetzt. Bevorzugte Salze sind die Alkalisalze, insbesondere die Na-Salze oder die Ammoniumsalze.

Beispiel 1

0,435 Mol 3-Amino, 4-methoxy-benzolsulfonsäure werden in 400 ml Wasser mit 50 ml 40 %iger Natronlauge bei pH 8 gelöst. Mit 120 ml 27 %iger Salzsäure wird gefällt, mit 250 g Eis gekühlt und mit 100 ml 4,35 Natriumnitritlösung bei 0-5 °C diazotiert. Man läßt 20 min. nachrühren und entfernt einen geringen Nitritüberschuß mit Amidosulfonsäure.

0,435 Mol Resorcin werden in 400 ml Wasser und 400 g Eis gelöst. Unter Halten eines pH-Wertes von 9 bis 9,5 mit insgesamt 46 ml 40 %iger Natronlauge und einer Temperatur von 0-5 °C wird die Lösung des Diazoniumsalzes zugegeben. Nach Beendigung der Kupplungsreaktion liegt der Monoazofarbstoff als Lösung vor.

0,435 Mol p-Sulfanilsäure werden in 1 200 ml Wasser mit 90 ml 40 %iger Natronlauge neutral gelöst. Mit 120 ml 27 %iger Salzsäure wird gefällt und bei 0-5 °C mit 100 ml 4,35 n Natriumnitrit-Lösung diazotiert.

Man rührt die feine Suspension 30 min. nach und entfernt den Nitritüberschuß mit Amidosulfonsäure.

Die Lösung des Monoazofarbstoffes wird mit 300 g Eis auf 0 °C gekühlt und unter Halten eines pH-Wertes von 8,5-9 mit 16 ml 40 %iger Natronlauge wird die Diazoniumsalz-Suspension zugegeben. Mit wenig 27 %iger Salzsäure wird neutralisiert, mit 225 g Kaliumchlorid gefällt, abgesaugt und i.V. getrocknet.

Man erhält einen Farbstoff der Wolle, Polyamid und Leder in gelbstichigen Braun-Nuancen anfärbt. In Form der freien Säure entspricht er der Formel

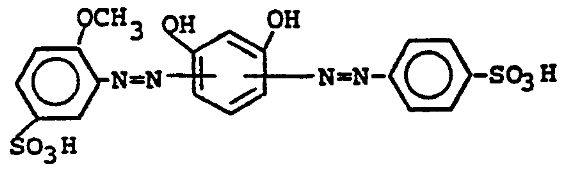

Ersetzt man in Beispiel 1 die 3-Amino-4-methoxy-benzolsulfonsäure und p-Sulfanilsäure durch äquivalente Mengen der Verbindungen A und B der folgenden Tabelle, so erhält man ebenfalls wertvolle hell- bis mittelbraune Farbstoffe für Wolle, Polyamid und Leder.

| Bsp. | A | B |
|---|---|---|
| 2 | 3-Amino, 4 methoxy-benzolsulfonsäure | 3-Amino-benzolsulfonsäure |
| 3 | 3-Amino, 4 methoxy-benzolsulfonsäure | 4-Amino, 1,3-benzoldisulfonsäure |
| 4 | 3-Amino, 4 methoxy-benzolsulfonsäure | 3-Amino, 1,4-benzoldisulfonsäure |
| 5 | 3-Amino, 4 methoxy-benzolsulfonsäure | 2-Amino, 5-nitro-benzolsulfonsäure |
| 6 | 3-Amino, 4 methoxy-benzolsulfonsäure | 2-Amino, 5-Chlor-benzolsulfonsäure |
| 7 | 3-Amino, 4 methoxy-benzolsulfonsäure | 2-Amino, 3,5-dichlor-benzolsulfonsäure |
| 8 | 3-Amino, 4 methoxy-benzolsulfonsäure | 4-Amino, 2,5-dichlor-benzolsulfonsäure |
| 9 | 3-Amino, 4 methoxy-benzolsulfonsäure | 2-Amino, 5-methyl-benzolsulfonsäure |
| 10 | 3-Amino, 4 methoxy-benzolsulfonsäure | 3-Amino, 4-methoxy-benzolsulfonsäure |
| 11 | 2-Amino, 5-methoxy-benzolsulfonsäure | 3-Amino, 4-methoxy-benzolsulfonsäure |
| 12 | 2-Amino, 5-methoxy-benzolsulfonsäure | 4-Amino-benzolsulfonsäure |
| 13 | 2-Amino, 5-methoxy-benzolsulfonsäure | 3-Amino-benzolsulfonsäure |
| 14 | 2-Amino, 5-methoxy-benzolsulfonsäure | 2-Amino-benzolsulfonsäure |
| 15 | 2-Amino, 5-methoxy-benzolsulfonsäure | 3-Amino, 1,4-benzoldisulfonsäure |
| 16 | 2-Amino, 5-methoxy-benzolsulfonsäure | 2-Amino, 5-chlor-benzolsulfonsäure |
| 17 | 2-Amino, 5-methoxy-benzolsulfonsäure | 4-Amino, 2,5-dichlor-benzolsulfonsäure |
| 18 | 5-Amino, 2-methoxy-benzolsulfonsäure | p-Sulfanilsäure |
| 19 | 5-Amino, 2-methoxy-benzolsulfonsäure | 4-Amino, 1,3-benzoldisulfonsäure |
| 20 | 5-Amino, 2-methoxy-benzolsulfonsäure | 4-Amino, 2,5-dichlor-benzolsulfonsäure |
| 21 | 5-Amino, 2-methoxy-benzolsulfonsäure | 2-Amino, 5-chlor-benzolsulfonsäure |

**Ansprüche**

1. Farbstoffe der Formel

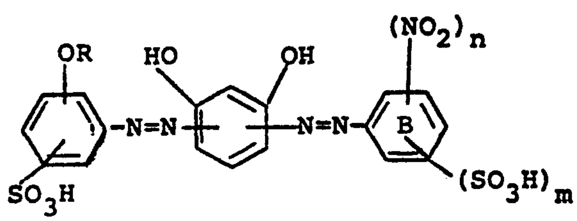

worin
$R = C_1$-$C_4$-Alkyl,
n = 0, 1 oder 2,
m = 1 oder 2,
wobei im Falle von m = 1 und n = 1 die Nitrogruppe in 4 Stellung und die Sulfogruppe in 3- bzw. 5-Stellung steht und der Ring B gegebenenfalls durch Cl, $CH_3$ oder $OCH_3$ weitersubstituiert ist.

2. Farbstoffe des Anspruches 1 mit n = 0 oder n = 1 mit Nitrogruppe in 2-, 3-, 5- oder 6-Stellung.

3. Farbstoffe der Formel

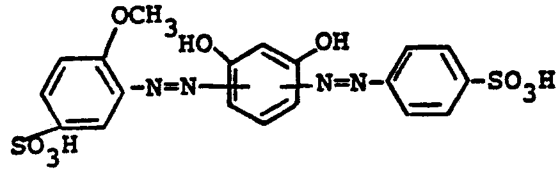

4. Farbstoffe der Formel

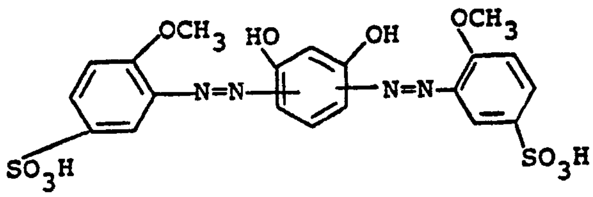

5. Verwendung der Farbstoffe der Ansprüche 1-4 zum Färben und Bedrucken stickstoffhaltiger Fasermaterialien und Leder.

## Claims

1. Dyestuffs of the formula

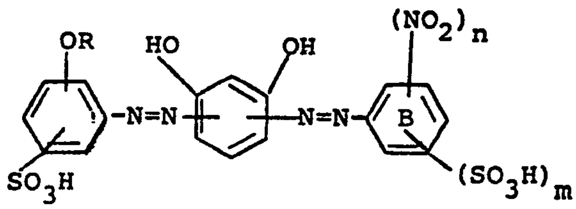

wherein

$R = C_1$-$C_4$-alkyl,

n = 0, 1 or 2,

m = 1 or 2,

and wherein in the case where m = 1 and n = 1 the nitro group is in the 4-position and the sulpho group is in the 3-position or 5-position and the ring B is optionally further substituted by Cl, $CH_3$ or $OCH_3$.

2. Dyestuffs of Claim 1, in which n = 0 or n = 1 with the nitro group in the 2-, 3-, 5- or 6-position.

3. Dyestuffs of the formula

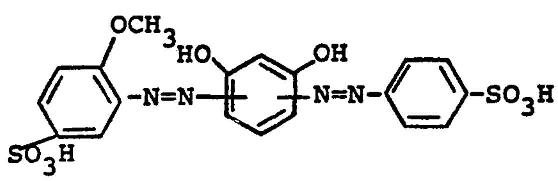

4. Dyestuffs of the formula

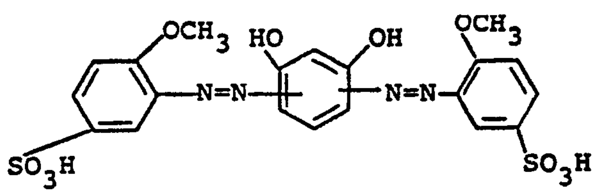

5. Use of the dyestuffs of Claims 1-4 for dyeing and printing nitrogen-containing fibre materials and leather.

## Revendications

1. Colorants de formule

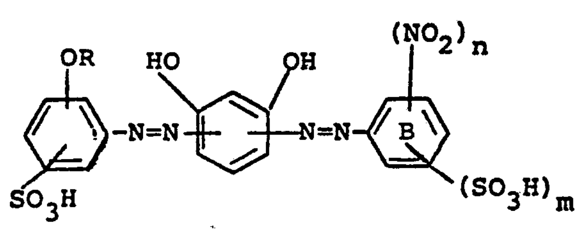

dans laquelle

R = alkyle en $C_1$ à $C_4$,

n = 0, 1 ou 2,

m = 1 ou 2,

en sorte que pour m = 1 et n = 1, le groupe nitro est en position 4 et le groupe sulfo est en position 3 ou 5 et le noyau B est éventuellement substitué encore par Cl, $CH_3$ ou $OCH_3$.

2. Colorants de la revendication 1, dans lesquels n = 0 ou n = 1, avec un groupe nitro en position 2, 3, 5 ou 6.

3. Colorants de formule

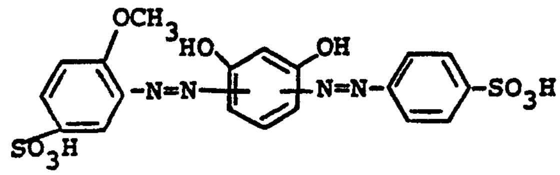

4. Colorants de formule

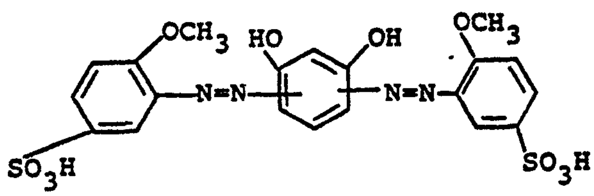

5. Utilisation des colorants des revendications 1 à 4 pour la teinture et l'impression de matières fibreuses contenant de l'azote et du cuir.